## Europäisches Patentamt
## European Patent Office
## Office européen des brevets

(11) Veröffentlichungsnummer: **0 309 712**
**A2**

# (12) EUROPÄISCHE PATENTANMELDUNG

(21) Anmeldenummer: **88113273.2**

(22) Anmeldetag: **16.08.88**

(51) Int. Cl.⁴: **G06F 12/12**

(30) Priorität: **30.09.87 DE 3733044**

(43) Veröffentlichungstag der Anmeldung:
**05.04.89 Patentblatt 89/14**

(84) Benannte Vertragsstaaten:
**AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Breintner, Richard, Dipl.-Ing.**
**Isenstrasse 23**
**D-8261 Ampfing(DE)**
Erfinder: **Wahr, Alfons, Dipl.-Inf.**
**Pucher Strasse 52**
**D-8080 Fürstenfeldbruck(DE)**

(54) **Anordnung zur Realisierung eines LRU (Least Recently Used) - ähnlichem Mechanismus für mehr als drei Elemente durch Binär-Matrix-Bäume.**

(57) Eine Schaltungsanordnung für Datenverarbeitungssysteme, zur Realisierung eines modular organisierten, erweiterbaren LRU (Least Recently Used)-Menchanismus für n Elemente, beispielsweise Arbeitsspeicherseiten, Zellen von Assoziativspeichern usw., in einem Datenverarbeitungssystem für ein Elementfeld (E) für n 2 enthält eine als Vollmatrix (M) ausgeführte Anordnung mit k Zeilen und m Spalten, in welcher Vollmatrix (M) bei jedem Kreuzungspunkt einer Zeile mit einer Spalte, ausgenommen bei denjenigen Kreuzungspunkten, die in die Hauptdiagonale der Vollmatrix (M) fallen, ein kreuzungspunktindividuelles Speicherelement (FF) vorgesehen ist, wobei alle Speicherelemente (FF) einen gleichen Aufbau aufweisen, und eine Steuereinrichtung (S) mit einer Steuerlogik (CL), einem Zähler (C), einem (I aus n)-Decoder (D), einem Multiplexer (MUX) und einem Komparator (KOMP), wobei die n Elemente eingangsseitig jeweils mit einer gemeinsamen Adreß-, Anforderungs-Suchbegriffsleistung oder dergl. und einer individuellen Ausgangsleitung des Multiplexers (MUX) verbunden sind und wobei die n Elemente ausgangsseitig mit einem ersten Eingang eines zeilenindividuellen Eingangsverknüpfungsgliedes (EZG), das mit seinem Ausgang an eine betreffende zeilenindividuelle Matrixspaltensetz/Matrixzeilelösch-Leitung angeschlossen ist und von dem ein zweiter Eingang gemeinsam mit allen zweiten Eingängen aller weiteren zeilenindividuellen Eingangs-Verknüpfungsglieder (EZG) an einen matrixseitigen Steuerausgang der Steuerlogik (CL) angeschlossen ist, verbunden sind und außerdem jeweils mit individuellen Ergebnissignaleingängen der Steuerlogik (CL) verbunden sind.

FIG 12

EP 0 309 712 A2

## Anordnung zur Realisierung eines LRU (Least Recently Used) - ähnlichem Mechanismus für mehr als drei Elemente durch Binär - Matrix - Bäume

Die vorliegende Erfindung bezieht sich auf eine Schaltungsanordnung für Datenverarbeitungssysteme, zur Realisierung eines LRU (Least Recently Used) - ähnlichem Mechanismus für im allgemeinen mehr als vier n Elemente, beispielsweise Arbeitsspeicherseiten, Zellen von Assoziativspeichern usw. in einem Datenverarbeitungssystem.

Ein mit einer derartigen Schaltungsanordnung durchzuführendes Betriebsverfahren dient zum Ermitteln desjenigen Elements, das am längsten nicht mehr benutzt wurde. Es ist sinnvoll anzuwenden, wenn es sich um eine kleine begrenzte Anzahl von Elemente handelt. Solche Elemente sind beispielsweise
- Arbeitsspeicher-Seiten (auch Kacheln genannt) in Datenverarbeitungsanlagen mit Page-Mechanismus,
- Zellen von Assoziativspeichern,
- Zellen, Puffer, Geräte bei Betriebssystemen, Prozeßsteuerungen usw.

Bisher werden derartige Benutzungsüberwachungen durch Software, Firmware, durch Zählerfelder mit Komparatoren, Zustandsautomaten, durchgeführt.

Der vorliegenden Erfindung liegt die Aufgabe zugrunde, eine Schaltungsanordnung der eingangs genannten Art zu schaffen, die auf einfache, kostengünstige, raumsparende und zuverlässige, nämlich den Faktor "Überwachungsfehler durch Personal" ausschließende Art und Weise die eingangs genannte Funktion ausführen kann.

Die der Erfindung zugrundeliegende Aufgabe wird durch eine Schaltungsanordnung der eingangs genannten Art und gemäß dem Oberbegriff des Patentanspruchs 1 gelöst, die erfindungsgemäß durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren im einzelnen beschrieben:

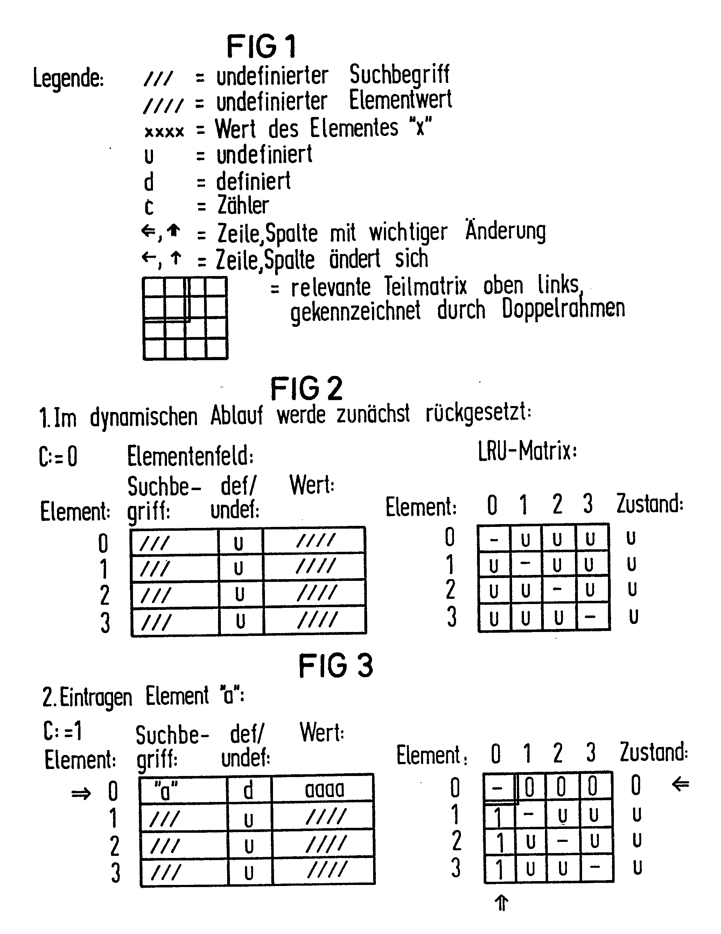

Fig. 1 zeigt schematisch eine relevante Teilmatrix mit n = 4, an deren Beispiel die verschiedenen Verhaltensschritte erläutert werden sollen.

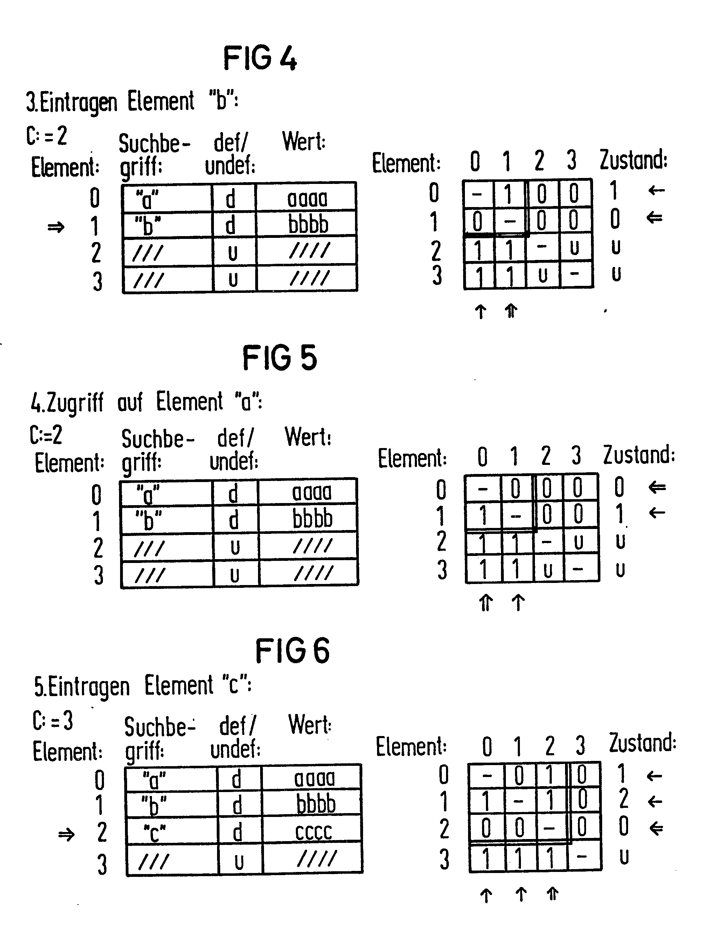

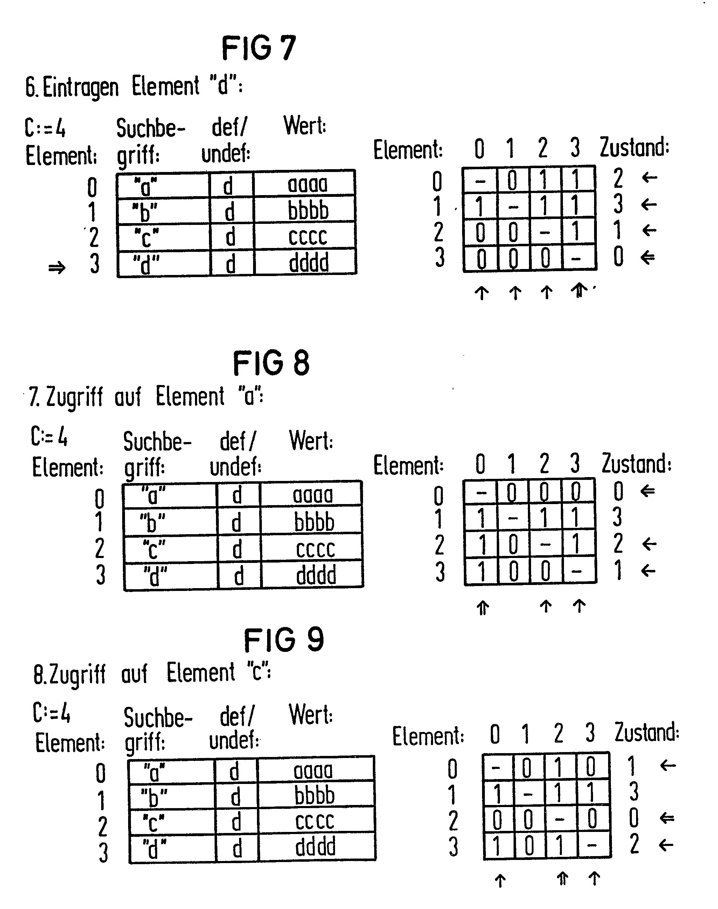

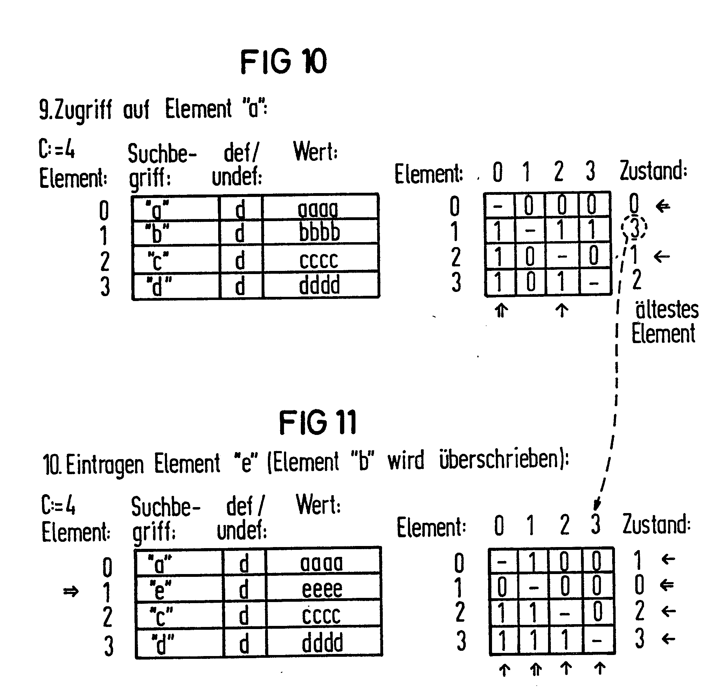

Fig. 2 bis Fig. 11 zeigen jeweils schematisch ein Elementenfeld und eine LRU-Matrix, mittels derer die verschiedenen Verfahrensschritte bzw. deren Auswirkungen erläutert werden.

Fig. 12 zeigt eine Schaltungsanordnung, aus der die Zusammenschaltung eines Elementenfeldes, einer LUR-Matrix sowie einer Steuerlogik hervorgeht.

Fig. 13 zeigt ein Blockschaltbild eines sog. Binär-Matrix -Baums.

Das mittels der erfindungsgemäßen Schaltungsanordnung durchzuführende Verfahren wird zunächst mathematisch, dann logisch erklärt. Eine Beschreibung eines Anwendungsbeispiels schließt sich daran an.

### Algebraische Algorithmusbeschreibung

Gegeben seien n Elemente $e_0$, $E_1$,..., $E_{n-1}$ mit $n \in \mathbb{N}$, n> 1. Jedes Element $E_i$ mit $i \in \{0,...,n-1\}$ befinde sich zum Zeitpunkt t in einem Zustand $Z_i^t$ mit $Z_i^t \in \{undef,0,...,n-1\}$, der Information über die Zugriffsreihenfolge zu diesem Element enthält. Mehrere Elemente dürfen den Zustand "undef" besitzen, d. h., daß sie undefiniert, also frei sind. Sind sie jedoch definiert, so ist die Zustands-Element-Beziehung bijektiv, d. h. daß jeder Zustandswert nur von genau einem Element belegt werden kann.

### Algorithmus:

2

1. Fall = Elementzugriff (z. B. Seit eim Arbeitsspeicher lesen/schreiben):

Wird auf das Element $E_j$ zugegriffen, so muß für alle Elemente der neue Zustand für den Zeitpunkt $t+1$ berechnet werden.

$$
z_i^{t+1} = \begin{cases} 0 & \text{für } i = j \\ z_i^t + 1 & \text{für } z_i^t < z_j^t \qquad i,j \{0,\ldots,n-1\} \\ z_i^t & \text{für } z_i^t > z_j^t \qquad t \in \mathbb{Z} \\ \text{"undef"} & \text{für } z_i^t = \text{"undef"}, i \neq j \end{cases} \qquad (1)
$$

2. Fall = Elementneubelegung bei Existenz undefinierter Elemente (z. B. eine freie Arbeitsspeicherseite neu belegen):

Solange es undefinierte Elemente gibt, sind diese zu belegen. Der Zustand berechnet sich dann nach

$$
z_i^{t+1} = \begin{cases} 0 & \text{für } i = 1 \qquad\qquad i,j \{0,\ldots,n-1\} \\ & \qquad\qquad\qquad t \in \mathbb{Z} \\ z_i^t + 1 & \text{für } z_i^t \neq \text{"undef"} \\ \text{"undef"} & \text{für } z_i^t = \text{"undef"}, i \neq j \end{cases} \qquad (2)
$$

3. Fall = Elementneubelegung, wenn alle Elemente definiert sind; das am längsten nicht mehr benutzte wird überschrieben (z. B. auslagern der ältesten ASP-Seite und neubelegen dieser Seite):

Das gesuchte Element ist $E_k$ für das gilt

$$z_k^t = n - 1 \qquad (3)$$

Die neuen Zustände berechnen sich zu

$$
z_i^{t+1} = \begin{cases} 0 & \text{für } i = k \\ z_i^t + 1 & \text{für } i \neq 1 \end{cases} \qquad (4)
$$

## Logische Implementierung durch eine Binärmatrix

Das Verfahren wird durch eine quadratische Binärmatrix der Ordnung n ohne Hauptdiagonale realisiert. Jedem Element wird eine Zeile zugeordnet. In jeder Zeile der Bool'schen Matrix ist für jedes Element je ein Spaltenelement, ein Bit vorhanden, ausgenommen für das eigene Element.

$$\text{Matrix } M = \begin{pmatrix} \vec{E}_0 \\ \vec{E}_1 \\ \cdot \\ \cdot \\ \cdot \\ \vec{E}_i \\ \cdot \\ \cdot \\ \vec{E}_{n-1} \end{pmatrix}, \quad \vec{E}_i = (e_{i,0}, \ldots, e_{i,i-1}, -, e_{i,i+1}, \ldots, e_{i,n-1})$$

$$e_{i,j} \in \{0,1\}$$

$$i,j \in \{0, \ldots, n-1\}$$

$$(5)$$

Die Summe der Zeilenelemente entspricht dem Zustand des Elements $E_i$ zum Zeitpunkt t:

$$z_i^t = \sum_{\substack{j=0 \\ j \neq i}}^{n-1} e_{i,j}^t \qquad (6)$$

Es ist noch ein Zähler C nötig mit entier $[ld(n+1)]$ Binärstellen, der angibt, wieviele Elemente definiert sind; $n \in IN$ sei die Anzahl der Elemente. Oft wird für n eine Zweierpotenz gewählt.

Algorithmus

1. Rücksetzen:

Beim Rücksetzen sind die Elemente als "undefiniert" zu kennzeichnen. Der Zähler C ist auf den Wert 0 zu setzen. Die Matrixelemente sind undefiniert, können aber beliebige Werte einnehmen.

2. Elementzugriff:

Wird auf das Element $E_i$ zugegriffen, so müssen in allen Matrixelementen $\bigvee\limits_{j=0}^{n-1} E_j$, $j \neq i$ die Spaltenelemente gesetzt werden:

$$\bigvee_{\substack{j = 0 \\ j \neq i}}^{n-1} \cdot (e_{j,i}^{t+1} := 1) \tag{7}$$

und die Zeilenelemente des Vektors $E_i$ werden gelöscht:

$$\bigvee_{\substack{j = 0 \\ j \neq i}}^{n-1} (e_{i,j}^{t+1} := 0) \tag{8}$$

Der gültige Teil der Binärmatrix ist bezüglich seiner Hauptdiagonalen antisymmetrisch in seiner Wertbelegung. Alle zulässigen Operationen des Algorithmus erhalten diese Antisymmetrie.

3. Elementneubelegung bei Existenz undefinierter Elemente:

Ist der Zähler C<n, so gibt es noch n-C undefinierte, d. h. freie Elemente. Es werde das nächstfreie Element $E_C$ benutzt. Für die Elemlte der Matrix sind die Anweisungen (7) und (8) mit i = C auszuführen. Der Zähler C ist um 1 zu inkrementieren.

Die Binärmatrix wird bezüglich der Ordnung (d.h. auch im Rang der Matrix) des benutzten Matrixteiles um 1 erhöht.

4. Elementneubelegung, wenn bereits alle Elemente definiert sind.

Wenn C = n gilt, so gibt es kein undefiniertes Element mehr. Das zeitlich am längsten nicht mehr benutzte Element ist freizugeben. Der Zustandswert dieses Elements ist n-1. Dies ist das Element $E_k$, für dessen Vektor gilt:

$$\bigvee_{\substack{i = 0 \\ i \neq k}}^{n-1} (e_{k,i}^{t} = 1) \tag{9}$$

Bezüglich der Elementneubelegung sind auch hier die Anweisungen (7) und (8) auszuführen mit i = k.

Schaltungsrealisierung mit Vollmatrix für n = 4:

Nachfolgend ist die Schaltungsrealisierung exemplarisch skizziert für einen Assoziativspeicher der Tiefe n = 4.

Dieses Beispiel ist für parallelen Zugriff auf die Elemente entwickelt. Der Vorteil dieser Realisierung mit Vollmatrix ist die Modularität, d. h. jede Matrixzelle ist einem Element auch räumlich zuordenbar und muß nur installiert werden, wenn auch das zugehörige Element installiert wird. Die Schaltung kann natürlich auch derart modifiziert werden, daß seriell zugegriffen wird. Dies ist bei größeren Anwendungen eventuell gewünscht.

Schaltungsrealisierung mit Halbmatrix

Wird auf die modulare Erweiterbarkeit die Realisierung mit Vollmatrix verzichtet, so kann eine Realisierung mit einer Halbmatrix auskommen, denn es gilt:

$$\bigvee_{\substack{i,j = 1 \\ i \neq j}}^{n-1} (e_{i,j}^{t} = 1 - e_{j,i}^{t}) \; \forall t \in \mathbb{Z} \qquad (10)$$

Aus dieser Beziehung folgt: Für einen schaltungsaufbau genügt es, die obere oder untere Dreiecksmatrix zu realisieren. Die Zustände der fehlenden Dreiecksmatrix erhält man durch die Inversausgänge der an der Hauptdiagonalen gespiegelten Zustands-Flipflops.

Aufwandsabschätzung für den LRU-Mechanismus: (Abgeschätzt für C8000-Gate-Arrays der Firma Fujitsu)

| Vollmatrix: | | benutzte Gatterzahl: |
|---|---|---|
| Matrix-FF-Elemente:<br>Matrixzeile löschen und Matrixspalte setzen:<br>Checker für älteste Zelle | 2xN2N<br>1xN2P<br>1xN8B | $2n^*(n-1)$<br>$2^*2n^*$entier [n/28]<br>$n^*$(entier [(n-1)/8] *6 + 6) |
| Aufwand = $2n^2 + 4n$ | | |
| + $4n^*$entier[n/28] | | |
| + $6n^*$entier [(n-1)/8] | | Gatter |
| Halbmatrix: | | benutzte Gatterzahl: |
| Matrix-FF-Elemente:<br>Matrixzeile löschen und Matrixspalte setzen:<br>Checker für älteste Zelle: | 2xN2N/2<br>1xN2P<br>1xN8B | $n^*(n-1)$<br>$2n^*$entier n/28<br>$n^*$(entier (n-1)/8 *6 + 6) |
| Aufwand = $n^2 + 5n$ | | |
| + $2n^*$entier n/28 | | |
| + $6n^*$entier (n-1)/8 | | Gatter |

Gatteraufwand für die beiden Realisierungen mit verschiedener Anzahl von Elementen:

| n | Vollmatrix | Halbmatrix |
|---|---|---|
| 2 | 36 | 30 |
| 4 | 88 | 68 |
| 8 | 240 | 168 |
| 16 | 832 | 560 |
| 32 | 3200 | 2080 |
| 64 | 12288 | 7872 |
| 128 | 48128 | 30592 |
| 236 | 191488 | 121088 |

Für sehr große n-Werte geht der Aufwand gegen folgende Grenzwerte

| Vollmatrix: | Aufwand (n ) | $2,9n^2 + 3,25n$ |
|---|---|---|
| Halbmatrix: | Aufwand (n ) | $1,8n^2 + 4,25n$ |

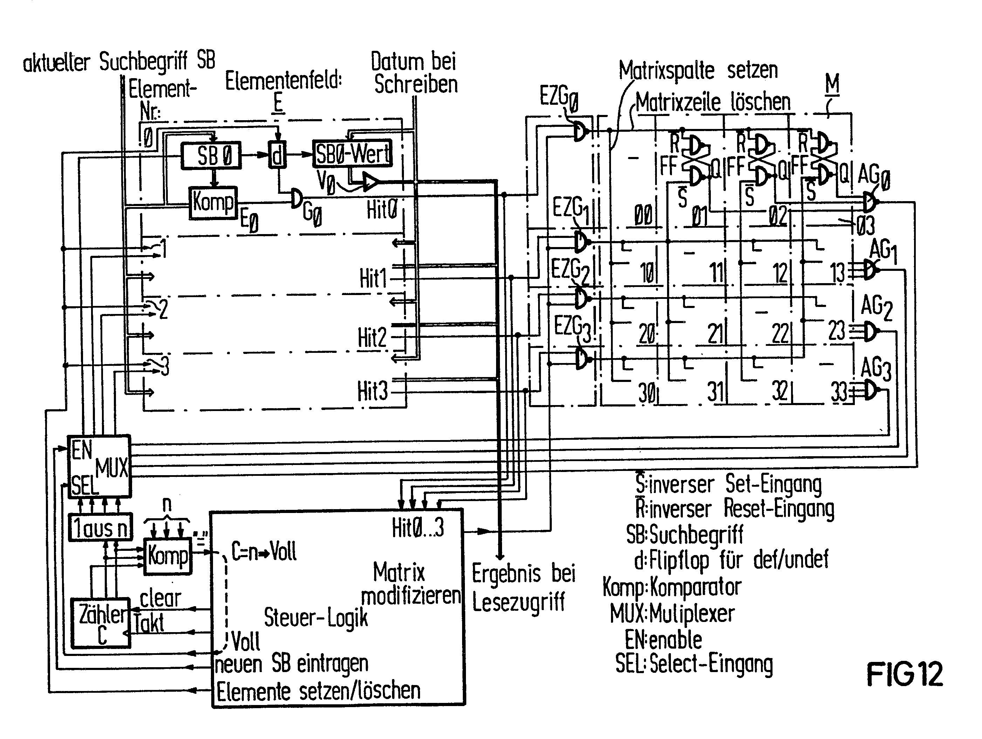

Im folgenden wird ein bevorzugtes Ausführungsbeispiel für die erfindungsgemäße Schaltungsanordnung mit einer Vollmatrix anhand von Fig. 12 beschrieben.

Die Schaltungsanordnung gemäß Fig. 12 enthält eine als Vollmatrix M ausgeführte Anordnung mit k Zeilen und m Spalten, in welcher Vollmatrix M bei jedem Kreuzungspunkt einer Zeile mit einer Spalte, ausgenommen bei denjenigen Kreuzungspunkten, die in die Hauptdiagonale der Vollmatrix M fallen, ein kreuzungspunktindividuelles Speicherelement FF vorgesehen ist, wobei alle Speicherelemente FF einen gleichen Aufbau aufweisen, und eine Steuereinrichtung S mit einer Steuerlogik CL, einem Zähler C, einem (1 aus n)-Decoder D, einem Multiplexer MUX und einem Komparator KOMP, wobei die n Elemente eingangsseitig jeweils mit einer gemeinsamen Adreß-, Anforderungs-Suchbegriffseinleitung oder dergl. und einer individuellen Ausgangleitung des Multiplexers MUX verbunden sind wobei die n Elemente ausgangsseitig mit einem ersten Eingang eines zeilenindiviudellen Eingangsverknüpfungsgliedes EZG, das mit seinem Ausgang an eine betreffende zeilenindividuelle Matrixpaltensetz/Matrixzeilenlösch-Leitung angeschlossen ist und von dem ein zweiter Eingang gemeinsam mit allen zweiten Eingängen aller weiteren zeilenindividuellen Eingangs-Verknüpfungsglieder EZG an einen matrixseitigen Steuerausgang der Steuerlogik (CL) angeschlossen ist, verbunden sind und außerdem jeweils mit individuellen Ergebnissignaleingängen der Steuerlogik CL verbunden sind.

Die Ausgänge aller kreuzungspunktindividuellen Speicherelemente FF jeweils einer Zeile der Vollmatrix M sind mit je einem Eingang eines zeilenindividuellen Ausgangs-Verknüpfungsgliedes AZG verbunden, deren Ausgänge individuell an erste Eingänge des Multiplexers MUX angeschlossen sind, welchem Multiplexer MUX über individuelle zweite Eingänge Ausgangssignale des (1 aus n)-Decoders D sowie über einen Freigabeeingang EN und einem Auswahleingang SEL Steuersignale aus der Steuerlogik CL über entsprechende elementefeldseitige Steuerausgänge zugeführt werden. Dem Zähler C sind aus der Steuerlogik CL ein Rücksetzsignal und ein Taktsignal über entsprechende Eingänge zuführbar. Der Zähler C gibt ein binär codiertes Ausgangssignal $2''$ aus, das sowohl dem (1 aus n)-Decoder D als auch entsprechenden ersten Eingängen des Komparators Komp zugeführt wird. Dem Komparator Komp wird ein binär codiertes Vergleichssignal $2''$ zugeführt. Eine Ausgangssignalleitung des Komparators Komp mit einem entsprechenden elementefeldseitigen Signaleingang der Steuerlogik CL verbunden ist, wobei immer dann, wenn der Komparator ein vorbestimmtes Vergleichsausgangssignal ausgibt, dieses durch die Steuerlogik CL zumindest mittelbar auf den Auswahleingang SEL einwirkt.

Das Eingangsverknüpfungsglied und das Ausgangsverknüpfungsglied AZG sind jeweils vorzugsweise als NAND-Glied realisiert. Jedes Teilfeld $T_0...T_n$ weist einerseits jeweils ein erstes, eingangsseitiges Register SB, ein Speicherglied d, ein zweites ausgangsseitiges Register SB-Wert, einen Ausgangssignalverstärker V, einen eingangsseitigen Komparator KompE und ein Verknüpfungsglied G auf, wobei die n Elemente eingangsseitig mit einer Adreßleitung und einer gemeinsamen Setz-/Lösch-Leitung aus der Steuerlogik CL verbunden sind. Das Verknüpfungsglied G weist eine UND-Funktion auf.

Bei Anwendung des exakt durchgeführten LRU-Mechanismus steigt der Aufwand ab 64 Elementen unrealistisch hoch an. Zur Lösung dieses Problems wird erfindungsgemäß vorgeschlagen, die Anzahl n der Elemente in k Gruppen zu je m Elementen (wenn ohne Rest nicht teilbar auch zusätzlich in Gruppen mit m-l Elementen) aufzuteilen

7

$$n = (k-r)*m + r*(m-1)$$

$$k,n,m \in \mathbb{N}$$
$$r \in \mathbb{N}_0 \quad r < k \qquad (11)$$
$$m \quad n,k > 1$$

Die Elemente jeder Gruppe werden jeweils durch den LRU-Mechanismus verwaltet, wobei die Implementierung z. B. wie zuvor beschrieben realisiert werden kann.

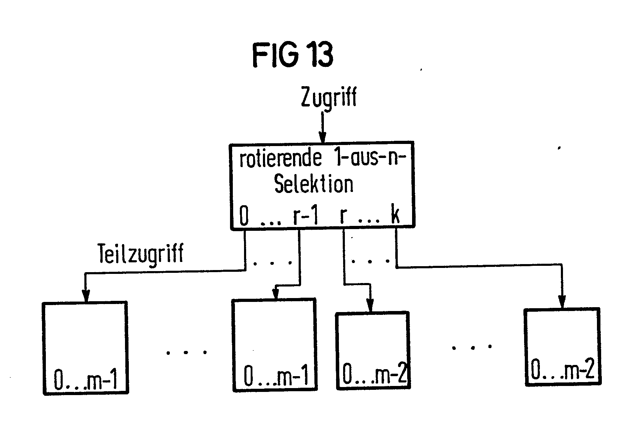

Diese k Gruppen werden nun ihrerseits durch den LRU-Mechanismus verwaltet. Er wird z. b. entsprechend der zuvor beschriebenen Schaltungsanordnung (Fig. 12) durch eine Binärmatrix realisiert, die im weiteren als Top-Matrix bezeichnet wird, vergl. Fig. 13.

Für eine spezifische Lösung kann der skizzierte Binär-Matrix-Baum auch tiefer angelegt werden. Der Vorteil dieser Schaltung liegt im schnellen, nichtseriellen Zugriff auf die LRU-Information.

Funktionsbeschreibung:

1. Fall = Elementzugriff (z. b. Seite im Arbeitsspeicher lesen/schreiben):

Wird auf ein Element zugegriffen, so muß in den Suchbegrifffeldern aller Elemente "innerhalb" aller Gruppen gesucht werden. Das Element, bei dem ein Hit vorliegt, ist das gesuchte und liefert die gewünschte Information bei einem Lesezugriff oder nimmt bei einem Schreibzugrif das Datum auf.

Für die Binärmatrix der zugehörigen Gruppe des Elements, das den Treffer hatte, werden die Zustände normal berechnet (wie zuvor beschrieben). Analog werden auch die Zustände der Top-Matrix neu gebildet. Hierin liegt die Abweichung des vorgeschlagenen Verfahrens zum korrekten LRU-Mechanismus.

Die Top-Matrix gibt die Gruppe an, auf die am längsten nicht mehr zugegriffen wurde. Innerhalb der Gruppe ist das Element, das gruppenlokal das Älteste ist, bekannt. Dies ist gewöhnlich nicht das "älteste" aller Elemente. Denn wird auf die Gruppe zugegriffen, in der das "älteste" Element enthalten ist, wird in der Top-Matrix für diese Gruppe der Zustand auf den "jüngsten" Wert gesetzt. Ein weiteres systemweit "sehr altes" Element derselben Gruppe wird aber erst nach k-l Eintragungen überschrieben. Grundsätzlich wird bei einer Neubelegung immer das "älteste" Element der selektierten Gruppe überschrieben. Der Top-Matrix-Steuermechanismus realisiert also nicht den LRU-Mechanismus für das Gesamtgebilde, ist aber eine Lösung für eine stochastisch vernünftige Verteilung.

2. Fall = Elementneubelegung bei Existenz undefinierter Elemente (z. B. eine freie Arbeitsspeicherseite neu belegen):

Die freien Elemente werden der Reihe nach belegt. Dies geschieht am einfachsten durch einen Zähler.

Der Vergabealgorithmus ist zwar frei wählbar, ist jedoch anwendungsabhängig. Es kann gesagt werden: Das komplette Auffüllen von einer Gruppe nach der anderen ist im allgemeinen sehr ungünstig. Am besten werden die Gruppen reihum jeweils um ein Element erweitert. Dies gewährleistet, daß die gruppenlokal "ältesten" Einträge auch die "ältesten" des Gesamtsystems sind, bevor der 3. Fall zum Tragen kommt.

3. Fall = Elementneubelegung, wenn alle Elemente definiert sind (z. B. Auslagern einer ASP-Seite und Neubelegen dieser Seite):

Sind alle Elemente vorgegeben (d. h. definiert), so muß ein bestehendes überschrieben werden. Mit Hilfe der Top-Matrix wird die Gruppe, auf die am längsten nicht mehr zugegriffen wurde, selektiert. Innerhalb dieser Gruppe wird das "älteste" Element entsprechend dem LRU-Mechanismus ausgewählt. Die LRU-Steuerinformation der Top-Matrix und die der selektierten Gruppe müssen neu gebildet werden. Die übrigen Gruppen bleiben unverändert.

Aufwandsabschätzung (mit Halbmatrizen): (Abgeschätzt für C8000-Gate-Arrays der Firma Fujitsu)

Berechnung des Aufwands für eine Implementierung mit Dreiecksmatrixhälften (siehe die zuvor gegebene Beschreibung).

$$a(n) = n^2 + 5n + 2n \cdot \text{entier } [n/28] + 6n \cdot \text{entier } [(n-1)/8] \text{ Gatter} \qquad (12)$$

Der Aufwand berechnet sich aus dem der Top-Dreiecksmatrixhälfte und dem der Gruppen-Steuerungen.

$$\text{Aufwand} = a(k) + (k-r) \cdot a(m) + r \cdot a(m-l) \text{ Gatter} \qquad (13)$$

| Aufwand für verschiedene Realisierungen | | | | | | |
|---|---|---|---|---|---|---|
| n | Vollmatrix | Halbmatrix | Organisation (k*m) : Aufwand | | | |
| | | | 2 Gruppen | 4 Gruppen | 8 Gruppen | 16 Gruppen |
| 2 | 36 | 30 | | | | |
| 4 | 88 | 68 | 2*2: 90 | | | |
| 8 | 240 | 168 | 2*4: 166 | 4*2: 188 | | |
| 16 | 832 | 560 | 2*8: 366 | 4*4: 340 | 8*2: 408 | |
| 32 | 3200 | 2080 | 2*16: 1150 | 4*8: 740 | 8*4: 712 | 16*2: 1040 |
| 64 | 12288 | 7872 | 2*32: 4190 | 4*16: 2308 | 8*8: 1512 | 16*4: 1648 |
| 128 | 48128 | 30592 | 2*64: 15774 | 4*32: 8388 | 8*16: 4648 | 16*8: 3248 |
| 256 | 191488 | 121088 | 2*128:61214 | 4*64: 31556 | 8*32: 16808 | 16*16: 9520 |
| 512 | | | | 4*128:122436 | 8*64: 63144 | 16*32: 33840 |
| 1024 | | | | | 8*128:244904 | 16*64:126512 |

## Ansprüche

1. Schaltungsanordnung für Datenverarbeitungssysteme, zur Realisierung eines modular organisierten, erweiterbaren LRU (Least Recently Used)-Mechanismus für n Elemente, beispielsweise Arbeitsspeicherseiten, Zellen von Assoziativspeichern usw., in einem Datenverarbeitungssystem, wobei n = 2 ist, **gekennzeichnet** durch
- ein Elementefeld (E) für n 2,
- eine als Vollmatrix (M) ausgeführte Anordnung mit k Zeilen und m Spalten, in welcher Vollmatrix (M) bei jedem Kreuzungspunkt einer Zeile mit einer Spalte, ausgenommen bei denjenigen Kreuzungspunkten, die in die Hauptdiagonale der Vollmatrix (M) fallen, ein kreuzungspunktindividuelles Speicherelement (FF) vorgesehen ist, wobei alle Speicherelemente (FF) einen gleichen Aufbau aufweisen, und
- eine Steuereinrichtung (S) mit einer Steuerlogik (CL), einem Zähler (C), einem (l aus n)-Decoder (D), einem Multiplexer (MUX) und einem Komparator (KOMP), wobei die n Elemente eingangsseitig jeweils mit einer gemeinsamen Adreß-, Anforderungs-Suchbegriffsleitung oder dergl. und einer individuellen Ausgangsleitung des Multiplexers (MUX) verbunden sind und wobei die n Elemente ausgangsseitig mit einem ersten Eingang eines zeilenindividuellen Eingangsverknüpfungsgliedes (EZG), das mit seinem Ausgang an eine betreffende zeilenindividuelle Matrixspaltensetz/Matrixzeilenlösch-Leitung angeschlossen ist und von dem ein zweiter Eingang gemeinsam mit allen zweiten Eingängen aller weiteren zeilenindividuellen Eingangs-Verknüpfungsglieder (EZG) an einen matrixseitigen Steuerausgang der Steuerlogik (CL) angeschlossen ist, verbunden sind und außerdem jeweils mit individuellen Ergebnissignaleingängen der Steuerlogik (CL) verbunden sind.

2. Schaltungsanordnung nach Anspruch 1,
**dadurch gekennzeichnet,**
die Ausgänge aller kreuzungspunktindividuellen Speicherelemente (FF) jeweils einer Zeile der Vollmatrix (M) mit je einem Eingang eines zeilenindividuellen Ausgangs-Verknüpfungsgliedes (AZG) verbunden sind, deren Ausgänge individuell an erste Eingänge des Multiplexers (MUX) angeschlossen sind, welchem Multiplexer (MUX) über individuelle zweite Eingänge Ausgangssignale des (l aus n)-Decoders (D) sowie über einen Freigabeeingang (EN) und einem Auswahleingang (SEL) Steuersignale aus der Steuerlogik (CL) über entsprechende elementefeldseitige Steuerausgänge zugeführt werden,

- daß dem Zähler (C) aus der Steuerlogik (CL) ein Rücksetzsignal und ein Taktsignal über entsprechende Eingänge zuführbar sind,

- daß der Zähler (C) ein binär codiertes Ausgangssignal ($2''$) ausgibt, das sowohl dem (I aus n)-Decoder (D) als auch entsprechenden ersten Eingängen des Komparators (Komp) zugeführt wird,

- daß dem Komparator (Komp) ein binär codiertes Vergleichssignal ($2^n$) zugeführt wird und

- daß eine Ausgangssignalleitung des Komparators (Komp) mit einem entsprechenden elementefeldseitigen Signaleingang der Steuerlogik (CL) verbunden ist, wobei immer dann, wenn der Komparator ein vorbestimmtes Vergleichsausgangssignal ausgibt, dieses durch die Steuerlogik (CL) zumindest mittelbar auf den Auswahleingang (SEL) einwirkt.

3. Schaltungsanordnung nach Anspruch 1 oder 2, dadurch **gekennzeichnet,** daß das Eingangsverknüpfungsglied (EZG) ein NAND-Glied ist.

4. Schaltungsanordnung nach Anspruch 1 oder 2, dadurch **gekennzeichnet,** daß das Ausgangs-Verknüpfungsglied (AZG) ein NAND-Glied ist.

5. Schaltungsanordnung nach einem der vorhergehenden Ansprüche, dadurch **gekennzeichnet,** daß jedes Teilfeld ($T_0...T_n$) seinerseits jeweils ein erstes, eingangsseitiges Register (SB), ein Speicherglied (d), ein zweites ausgangsseitiges Register (SB-Wert), einen Ausgangssignalverstärker (V), einen eingangsseitigen Komparator (KompE) und ein Verknüpfungsglied (G) aufweist, wobei die n Elemente eingangs seitig mit einer Adreßleitung und einer gemeinsamen Setz-/Lösch-Leitung aus der Steuerlogik (CL) verbunden sind.

6. Schaltungsanordnung nach Anspruch 5, dadurch **gekennzeichnet,** daß das Verknüpfungsglied (G) des Elemente-Feldes (E) ein UND-Glied ist.

7. Schaltungsanordnung nach einem der vorhergehenden Ansprüche, dadurch **gekennzeichnet ,** daß die Anzahl n der Elemente in k Gruppen aufgeteilt ist, wobei wenn n nicht ohne Rest teilbar ist, die Anzahl in Gruppen mit m-I Elementen eingeteilt ist, und daß die k Gruppen ihrerseits durch den LRU-Mechanismus verwaltet werden (Fig. 13).

# FIG 1

Legende:    ///   = undefinierter Suchbegriff

            //// = undefinierter Elementwert

            xxxx = Wert des Elementes "x"

            u     = undefiniert

            d     = definiert

            c     = Zähler

            ⇐,⬆ = Zeile,Spalte mit wichtiger Änderung

            ←, ↑ = Zeile,Spalte ändert sich

                       = relevante Teilmatrix oben links, gekennzeichnet durch Doppelrahmen

# FIG 2

1. Im dynamischen Ablauf werde zunächst rückgesetzt:

C:=0     Elementenfeld:                  LRU-Matrix:

| Element: | Suchbe-griff: | def/undef: | Wert: |
|---|---|---|---|
| 0 | /// | U | //// |
| 1 | /// | U | //// |
| 2 | /// | U | //// |
| 3 | /// | U | //// |

| Element: | 0 | 1 | 2 | 3 | Zustand: |
|---|---|---|---|---|---|
| 0 | – | U | U | U | U |
| 1 | U | – | U | U | U |
| 2 | U | U | – | U | U |
| 3 | U | U | U | – | U |

# FIG 3

2. Eintragen Element "a":

C:=1

| Element: | Suchbe-griff: | def/undef: | Wert: |
|---|---|---|---|
| ⇒ 0 | "a" | d | aaaa |
| 1 | /// | U | //// |
| 2 | /// | U | //// |
| 3 | /// | U | //// |

| Element: | 0 | 1 | 2 | 3 | Zustand: |
|---|---|---|---|---|---|
| 0 | – | 0 | 0 | 0 | 0 ⇐ |
| 1 | 1 | – | U | U | U |
| 2 | 1 | U | – | U | U |
| 3 | 1 | U | U | – | U |

⬆

# FIG 4

3. Eintragen Element "b":

C:=2

| Element: | Suchbe-griff: | def/undef: | Wert: |
|---|---|---|---|
| 0 | "a" | d | aaaa |
| ⇒ 1 | "b" | d | bbbb |
| 2 | /// | u | //// |
| 3 | /// | u | //// |

| Element: | 0 | 1 | 2 | 3 | Zustand: |
|---|---|---|---|---|---|
| 0 | − | 1 | 0 | 0 | 1 ← |
| 1 | 0 | − | 0 | 0 | 0 ⇐ |
| 2 | 1 | 1 | − | u | u |
| 3 | 1 | 1 | u | − | u |

↑ ⇑

# FIG 5

4. Zugriff auf Element "a":

C:=2

| Element: | Suchbe-griff: | def/undef: | Wert: |
|---|---|---|---|
| 0 | "a" | d | aaaa |
| 1 | "b" | d | bbbb |
| 2 | /// | u | //// |
| 3 | /// | u | //// |

| Element: | 0 | 1 | 2 | 3 | Zustand: |
|---|---|---|---|---|---|
| 0 | − | 0 | 0 | 0 | 0 ⇐ |
| 1 | 1 | − | 0 | 0 | 1 ← |
| 2 | 1 | 1 | − | u | u |
| 3 | 1 | 1 | u | − | u |

⇑ ↑

# FIG 6

5. Eintragen Element "c":

C:=3

| Element: | Suchbe-griff: | def/undef: | Wert: |
|---|---|---|---|
| 0 | "a" | d | aaaa |
| 1 | "b" | d | bbbb |
| ⇒ 2 | "c" | d | cccc |
| 3 | /// | u | //// |

| Element: | 0 | 1 | 2 | 3 | Zustand: |
|---|---|---|---|---|---|
| 0 | − | 0 | 1 | 0 | 1 ← |
| 1 | 1 | − | 1 | 0 | 2 ← |
| 2 | 0 | 0 | − | 0 | 0 ⇐ |
| 3 | 1 | 1 | 1 | − | u |

↑ ↑ ⇑

# FIG 7

6. Eintragen Element "d":

C:=4

| Element: | Suchbegriff: | def/undef: | Wert: |
|---|---|---|---|
| 0 | "a" | d | aaaa |
| 1 | "b" | d | bbbb |
| 2 | "c" | d | cccc |
| ⇒ 3 | "d" | d | dddd |

| Element: | 0 | 1 | 2 | 3 | Zustand: |
|---|---|---|---|---|---|
| 0 | – | 0 | 1 | 1 | 2 ← |
| 1 | 1 | – | 1 | 1 | 3 ← |
| 2 | 0 | 0 | – | 1 | 1 ← |
| 3 | 0 | 0 | 0 | – | 0 ⇐ |
| | ↑ | ↑ | ↑ | ⇑ | |

# FIG 8

7. Zugriff auf Element "a":

C:=4

| Element: | Suchbegriff: | def/undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | – | 0 | 0 | 0 | 0 ⇐ |
| 1 | 1 | – | 1 | 1 | 3 |
| 2 | 1 | 0 | – | 1 | 2 ← |
| 3 | 1 | 0 | 0 | – | 1 ← |
| | ⇑ | | ↑ | ↑ | |

# FIG 9

8. Zugriff auf Element "c":

C:=4

| Element: | Suchbegriff: | def/undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | – | 0 | 1 | 0 | 1 ← |
| 1 | 1 | – | 1 | 1 | 3 |
| 2 | 0 | 0 | – | 0 | 0 ⇐ |
| 3 | 1 | 0 | 1 | – | 2 ← |
| | ↑ | | ⇑ | ↑ | |

# FIG 10

9. Zugriff auf Element "a":

C:=4

| Element: | Suchbe-griff: | def/undef: | Wert: |
|---|---|---|---|
| 0 | "a" | d | aaaa |
| 1 | "b" | d | bbbb |
| 2 | "c" | d | cccc |
| 3 | "d" | d | dddd |

| Element: | 0 | 1 | 2 | 3 | Zustand: |
|---|---|---|---|---|---|
| 0 | – | 0 | 0 | 0 | 0 ← |
| 1 | 1 | – | 1 | 1 | (3) |
| 2 | 1 | 0 | – | 0 | 1 ← |
| 3 | 1 | 0 | 1 | – | 2 |

ältestes Element

# FIG 11

10. Eintragen Element "e" (Element "b" wird überschrieben):

C:=4

| Element: | Suchbe-griff: | def/undef: | Wert: |
|---|---|---|---|
| 0 | "a" | d | aaaa |
| ⇒ 1 | "e" | d | eeee |
| 2 | "c" | d | cccc |
| 3 | "d" | d | dddd |

| Element: | 0 | 1 | 2 | 3 | Zustand: |
|---|---|---|---|---|---|
| 0 | – | 1 | 0 | 0 | 1 ← |
| 1 | 0 | – | 0 | 0 | 0 ← |
| 2 | 1 | 1 | – | 0 | 2 ← |
| 3 | 1 | 1 | 1 | – | 3 ← |

FIG 12

## FIG 13

Zugriff

rotierende 1-aus-n-Selektion

0 ... r-1  r ... k

Teilzugriff

. . .  . . .

0...m-1  . . .  0...m-1  0...m-2  . . .  0...m-2